# DEMANDE DE BREVET EUROPEEN

(11) **EP 1 501 242 A2**
(43) Date de publication de la demande: **26.01.2005**
(21) Numéro de dépôt: 04291565.2
(22) Date de dépôt: 21.06.2004
(51) Int. Cl.: H04L 12/24

(54) **Utilisation d'un système de gestion d'équipements de réseau pour la gestion de règles de politique de réseau**

(30) Priorité: 08.07.2003 FR 0308306
(71) Demandeur: ALCATEL, 75008 Paris (FR)
(72) Inventeur: Gonguet, Arnaud, 75013 Paris (FR); Edwiges, Maurice, 91280 St Pierre du Perray (FR); Robinson, Julien, 75014 Paris (FR)
(74) Mandataire: Chaffraix, Sylvain

(57) **Abrégé**

Un système (EMS) est dédié à la gestion d'équipements (NE) de réseau de communications (N), capables d'effectuer des traitements de trafic associés à des services et définis par des règles de politique délivrées sous forme de données primaires par un serveur de politique (PS). Ce système (EMS) comprend des moyens de traitement (MT) interfacés entre le serveur de politique (PS) et les équipements de réseau (NE) afin de permettre une gestion centralisée des règles de politique et de leur implantation dans les équipements de réseau. Les moyens de traitement (MT) comportent, par exemple, des moyens de conversion (MC) chargés, lorsqu'ils reçoivent des données primaires provenant du serveur de politique (PS) et destinées à l'un des équipements de réseau (NE), de convertir ces données primaires en commandes de configuration afin qu'elles soient transmises à cet équipement selon son protocole de gestion.

## Description

L'invention concerne le domaine de la gestion d'équipements (ou éléments) d'un réseau de communications, à l'aide de règles de politique.

On entend ici par « équipement de réseau» tout type de matériel, comme par exemple des serveurs, des terminaux, des commutateurs, des routeurs ou des concentrateurs, capable d'échanger des données, notamment de gestion, selon un protocole de gestion de réseau avec le système de gestion de réseau (ou NMS pour « Network Management System ») de son réseau d'appartenance. Le protocole de gestion de réseau peut être par exemple le protocole SNMP (pour « Simple Network Management Protocol » RFC 2571-2580) utilisé notamment dans les réseaux de type ADSL, le protocole TL1 utilisé notamment dans les réseaux de type SONET, le protocole Q3 utilisé notamment dans les réseaux de type SDH, ou encore les protocoles CLI et CORBA.

Dans certains réseaux de communications, les équipements (ou éléments) de réseau sont gérés en fonction d'une politique (ou « policy ») définie par des règles de politique (ou « policy rules »).

On entend ici par « règle de politique » une règle de type « si <condition> alors <action> ».

Ces règles de politique définissent des traitements de trafic, associés à des services, que doivent effectuer les équipements de réseau. Elles sont tout d'abord élaborées par l'opérateur (ou superviseur) du réseau en fonction des équipements qui le constituent et des accords de niveau de service (ou SLAs pour « Service Level Agreements ») passés avec ses clients. Puis, elles sont transmises à un serveur de politique (ou « policy server »), appartenant au système de gestion NMS, chargé de les valider.

Les équipements de réseau n'étant pas capables de comprendre les règles de politique validées et délivrées par le serveur de politique, elles doivent donc être converties en commandes de configuration, par exemple de type CLI (pour « Command Line Interface »).

Une telle conversion dépend non seulement du type de l'équipement de réseau, mais également du protocole de gestion qu'il utilise pour dialoguer avec le système de gestion NMS, et plus précisément avec son système de gestion d'équipements (ou EMS pour « Element Management System ») qui lui sert d'interface de dialogue. Le serveur de politique ne connaissant ni les types des équipements ni leurs protocoles de gestion, il ne peut donc pas assurer les conversions de façon centralisée.

Pour remédier à cet inconvénient, on interpose entre le serveur de gestion et chaque équipement de réseau ce que l'homme de l'art appelle un « point d'application de politique » (ou PEP pour « Policy Enforcement Point »). Chaque PEP est dédié à la conversion des données primaires, délivrées par le serveur de politique et définissant les règles de politiques validées, en commandes de configuration adaptées spécifiquement au protocole de gestion de l'équipement de réseau auquel il est associé.

Il faut donc concevoir spécifiquement un PEP pour chaque équipement de réseau, puis équiper chaque équipement du PEP associé, ce qui nuit à la flexibilité de l'architecture de gestion à base de règles de politique et nécessite des interventions humaines coûteuses.

Par ailleurs, en raison du mode de transmission des règles de politique, il peut survenir des conflits entre des règles de politique instaurées dans un même équipement de réseau.

Certes, il est possible d'afficher sur un écran, à l'aide d'un outil tel qu'Orchestream, l'ensemble des règles de politique qui ont été instaurées dans un équipement de réseau, mais ce type d'outil ne permet pas d'accéder conjointement aux paramètres de configuration de l'équipement, induits par lesdites règles.

Il est également possible d'afficher sur un écran, à l'aide d'un outil tel qu'un navigateur EMS, les paramètres de configuration d'un équipement de réseau, induits par les règles de politique qu'il a instaurées, mais ce type d'outil ne permet pas d'accéder conjointement aux règles de politique instaurées.

En d'autres termes, les outils existants ne peuvent que très partiellement aider les opérateurs à diagnostiquer des conflits au sein des équipements qui constituent leurs réseaux.

L'invention a donc pour but de remédier à tout ou partie des inconvénients précités.

Elle propose à cet effet un système de gestion d'équipements de réseau (EMS), pour un réseau de communications comprenant une multiplicité d'équipements (ou éléments) de réseau capables d'effectuer des traitements de trafic associés à des services et définis par des règles de politique délivrées sous forme de données primaires par un serveur de politique.

Ce système EMS se caractérise par le fait qu'il comprend des moyens de traitement interfaces entre le serveur de politique et les équipements de réseau afin de permettre une gestion centralisée des règles de politique et de leur implantation dans les équipements de réseau.

Selon une autre caractéristique de l'invention, les moyens de traitement peuvent comporter des moyens de conversion chargés, lorsqu'ils reçoivent des données primaires provenant du serveur de politique et destinées à l'un au moins des équipements de réseau, de convertir ces données primaires en commandes de configuration, par exemple de type CLI (pour « Command Line Interface ») ou SNMP, afin qu'elles soient transmises à cet équipement selon son protocole de gestion, de façon classique.

Préférentiellement, les moyens de conversion sont implantés dans des moyens d'adaptation de protocoles du système EMS agencés, une fois que le protocole de gestion d'un équipement a été déterminé (par eux ou par les moyens de traitement), pour adapter les commandes de configuration, délivrées par les moyens de conversion, au format de ce protocole de gestion, afin qu'elles soient transmises à cet équipement.

Le système de gestion d'équipements EMS peut également comprendre une mémoire dans laquelle sont stockés des descripteurs.

Un descripteur permet l'accès à un équipement, et peut également stocker tout ou partie des informations associées à cet équipement et qui définissent son état. Ces informations peuvent comprendre notamment des données primaires ou secondaires qui peuvent ne pas être connues de l'équipement notamment lorsqu'il ne connaît que les données tertiaires. En d'autres termes, un descripteur est un module permettant d'accéder à un aspect d'un ou plusieurs équipements (indépendamment de l'équipement), comme par exemple sa configuration (c'est-à-dire son agencement physique ou matériel), ou certaines au moins de ses fonctionnalités, ou encore, grâce à l'invention, ses règles de politique. Grâce à de tels descripteurs, un équipement peut donc être considéré sous différents aspects associés à différents descripteurs.

Les moyens d'adaptation de protocoles comprennent préférentiellement des modules d'adaptation de protocole auxquels accèdent sélectivement les descripteurs une fois que l'un d'entre eux a déterminé le protocole de gestion de l'équipement destinataire des commandes de configuration.

En variante ou en complément, les descripteurs des moyens de traitement peuvent permettre l'accession, sur ordre, à l'un quelconque des équipements de réseau, ou à une mémoire dédiée contenant des informations représentatives de leur état, afin de permettre la gestion de certaines au moins des règles de politique qu'il a instaurées.

Cette accession peut par exemple permettre d'extraire, sur ordre, des données secondaires représentatives de règles de politique choisies précédemment instaurées dans un équipement. Cette extraction s'effectue soit directement dans l'équipement concerné, soit dans la mémoire dédiée, par exemple du système EMS. Mais, elle peut également permettre d'extraire d'un équipement de réseau, sur ordre, des données tertiaires représentatives de paramètres de configuration instaurés afin de satisfaire à certaines des règles de politique précédemment reçues.

Lorsque les moyens de traitement sont agencés pour extraire d'un équipement de réseau et/ou de la mémoire dédiée à la fois des données secondaires et des données tertiaires, il est avantageux qu'ils établissent également une correspondance entre ces données secondaires et tertiaires. Ils peuvent alors également comporter des moyens d'analyse chargés d'analyser chaque correspondance entre données secondaires et tertiaires, afin de délivrer des données d'analyse représentatives de l'effet d'au moins une règle de politique sur la configuration d'un équipement de réseau.

Le système de gestion d'équipements (EMS) présenté ci-avant peut être implanté dans un serveur de gestion, mais, en variante, il peut être implanté dans un équipement de réseau.

L'invention porte en outre sur un procédé de gestion d'équipements de réseau, pour un réseau de communications comprenant une multiplicité d'équipements de réseau capables d'effectuer des traitements de trafic associés à des services et définis par des règles de politique délivrées sous forme de données primaires par un serveur de politique.

Ce procédé se caractérise par le fait qu'il consiste à interfacer un système de gestion d'équipements (EMS) entre le serveur de politique et les équipements de réseau afin de permettre une gestion centralisée des règles de politique et de leur implantation dans ces équipements de réseau.

Selon une autre caractéristique du procédé, lorsque l'on reçoit du serveur de politique des données primaires destinées à l'un au moins des équipements de réseau, on convertit ces données primaires en commandes de configuration, par exemple de type CLI ou SNMP, adaptées au protocole de gestion de cet équipement, puis on lui transmet ces commandes de configuration.

Par ailleurs, on peut accéder à un équipement de réseau désigné et/ou à une mémoire dédiée, lorsque l'on souhaite gérer certaines règles de politique qu'il a instaurées. On peut ainsi extraire d'un équipement de réseau et/ou de la mémoire dédiée des données secondaires représentatives de règles de politique choisies précédemment instaurées et/ou des données tertiaires représentatives de paramètres de configuration instaurés pour satisfaire à certaines règles de politique précédemment reçues.

En outre, en présence d'une double extraction, on peut établir une correspondance entre les données secondaires et les données tertiaires associées à un équipement de réseau. On peut ensuite éventuellement procéder à l'analyse de la correspondance afin de délivrer des données d'analyse représentatives de l'effet d'au moins une règle de politique sur la configuration d'un équipement de réseau.

L'invention est particulièrement bien adaptée, bien que de façon non exclusive, aux réseaux de communications tels que les réseaux de transmission (par exemple de type WDM, SONET, SDH), les réseaux de données (par exemple de type Internet-IP ou ATM) ou les réseaux de voix (par exemple de type classique, mobile ou NGN).

D'autres caractéristiques et avantages de l'invention apparaîtront à l'examen de la description détaillée ci-après, et des dessins annexés, sur lesquels :

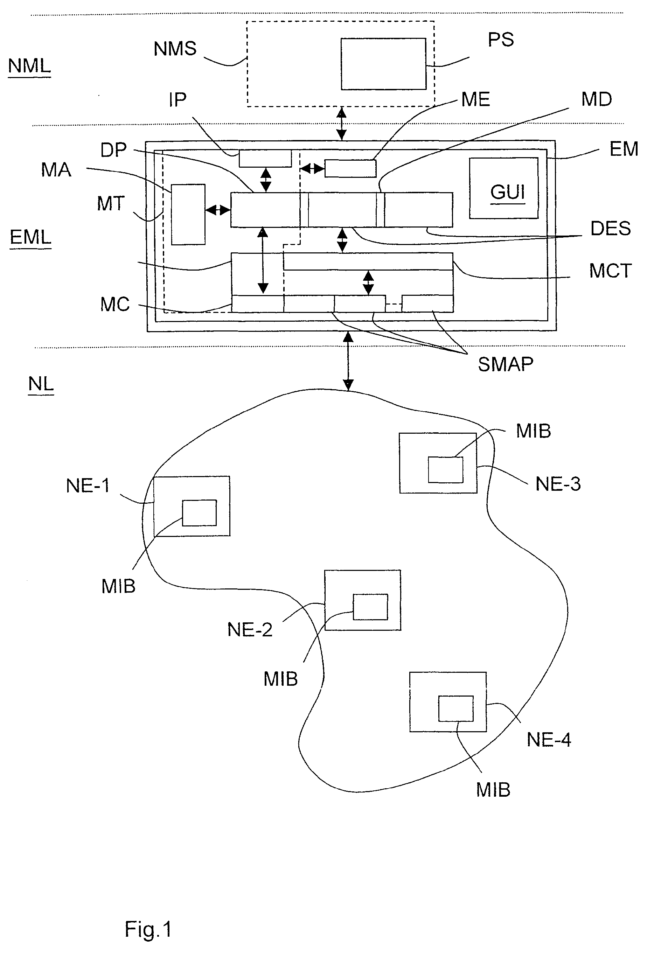

- la figure 1 illustre de façon schématique un exemple de réseau de communications équipé d'un système de gestion d'équipements (EMS) selon l'invention, implanté dans un serveur de gestion, et
- la figure 2 illustre de façon schématique un exemple d'écran d'affichage d'une partie d'une arborescence d'équipements de réseau en correspondance d'une fenêtre d'informations.

Les dessins annexés pourront non seulement servir à compléter l'invention, mais aussi contribuer à sa définition, le cas échéant.

L'invention a pour objet de permettre la gestion centralisée d'équipements (ou éléments) d'un réseau de communications, à l'aide de règles de politique, par un système de gestion d'équipements EMS.

On considère dans ce qui suit, à titre d'exemple illustratif, que le réseau de communications est au moins en partie de type Internet (IP). Mais, l'invention s'applique à d'autres types de réseau, comme par exemple aux réseaux de transmission de type WDM, SONET ou SDH, aux réseaux de données de type ATM, ou aux réseaux de voix de type classique, mobile ou NGN.

Un réseau de communications N de type géré peut être schématiquement décomposé en trois couches : une première couche appelée couche de gestion de réseau NML (pour « Network Management Layer »), une seconde couche couplée à la couche EML et appelée couche de gestion d'équipements EML (pour « Element Management Layer »), et une troisième couche appelée couche réseau NL (pour « Network Layer »).

La troisième couche NL comprend une multiplicité d'équipements (ou éléments) de réseau NE-i (ici i = 1 à 4, à titre d'exemple), reliés les uns aux autres par des moyens de communications.

On entend ici par « équipement de réseau » NE-i un matériel capable d'échanger des données de gestion avec le serveur de gestion MS, selon un protocole de gestion choisi, comme par exemple le protocole SNMP (pour « Simple Network Management Protocol » RFC 2571-2580), ou les protocoles TL1, CORBA, CLI ou Q3. Il s'agit, par exemple, de serveurs périphériques ou de coeur, de terminaux, de commutateurs, de routeurs ou de concentrateurs.

La première couche NML est constituée d'un système de gestion de réseau (ou NMS pour « Network Management System ») destiné à permettre au gestionnaire (ou superviseur) du réseau de gérer et contrôler à distance les équipements NE-i auxquels il est couplé.

Ce système de gestion de réseau NMS comprend un serveur de politique PS (ou « Policy Server ») alimenté en règles de politique par un gestionnaire de politique piloté par l'opérateur du réseau N et implanté dans le système de gestion de réseau NMS. Ces règles de politique définissent par groupe des politiques élaborées par l'opérateur de manière à satisfaire les accords de niveau de service (ou SLAs pour « Service Level Agreements ») passés avec ses clients. Elles sont destinées à définir les traitements de trafic que les différents équipements de réseau NE-i doivent effectuer afin de mettre en oeuvre les services offerts par le réseau N.

Le serveur de politique PS est chargé de valider les règles de politique qu'il reçoit du gestionnaire de politique. Selon l'invention, les règles de politique validées sont ensuite transmises sous la forme de données primaires à la seconde couche EML.

Cette seconde couche EML est constituée d'au moins un système de gestion d'équipements (ou EMS pour « Element Management System ») chargé d'assurer l'interface de dialogue entre les équipements de réseau NE-i et le système de gestion NMS. Ici, le système de gestion d'équipements EMS est implanté dans un serveur de gestion MS raccordé au système de gestion de réseau NMS et aux équipements de réseau NE-i. Mais, il pourrait être implanté dans un équipement de réseau NE-i, tel qu'un terminal dédié à la gestion locale d'équipement(s), également appelé « craft terminal ».

Le système de gestion d'équipements EMS selon l'invention est destiné à gérer les règles de politique du réseau N en plus de ses fonctions traditionnelles. En d'autres termes, il reprend intégralement l'architecture et la composition d'un système de gestion d'équipements EMS traditionnel et comporte en combinaison des moyens de traitement MT assurant la fonction d'interface entre le serveur de politique PS et les équipements de réseau NE-i, afin de permettre une gestion centralisée des règles de politique et de leur implantation dans les équipements de réseau NE-i.

On entend ici par « fonction traditionnelle » le fait de faire dialoguer entre elles les interfaces du réseau (et notamment celles des équipements), et de gérer les alarmes et les événements déclenchés ou survenus au sein des équipements de réseau NE-i. Cette gestion des alarmes et des événements permet au système de gestion NMS de récupérer les données d'informations représentatives de l'état de fonctionnement des équipements NE-i, et notamment des alarmes et des comptes rendus d'événements survenus dans les équipements NE-i, afin d'en assurer la gestion (par exemple en déclenchant des actions adaptées).

A cet effet, le système de gestion d'équipements EMS comporte un arbre d'informations de gestion (ou MIT pour « Management Information Tree ») et une mémoire MD dans laquelle sont stockés des descripteurs DES.

Un descripteur est un module informatique qui contient toutes les données nécessaires à la gestion par le système de gestion NMS d'un aspect d'au moins un élément d'équipement NE-i.

Tout type d'aspect peut être envisagé, et notamment la configuration (c'est-à-dire l'agencement physique ou matériel comme par exemple une carte à circuits intégrés ou une interface de connexion), les fonctionnalités, ou les règles de politique instaurées. Un descripteur peut également stocker tout ou partie des informations associées à cet équipement et qui définissent son état, et notamment le protocole d'échange (ou de gestion) qu'il utilise. Grâce à de tels descripteurs, le système EMS peut donc accéder à différents aspects d'un équipement NE-i.

Le système de gestion d'équipements EMS comprend également un module d'interface graphique, par exemple de type GUI (pour « graphical User Interface »), qui peut être délocalisé dans le système de gestion de réseau NMS, et qui permet l'affichage d'informations représentatives des équipements de réseau NE-i.

Grâce à son module de traitement MT, le système de gestion d'équipements EMS, selon l'invention, peut assurer une fonction de conversion des règles de politique provenant, sous la forme de données primaires, du serveur de politique PS, via une interface de politique IP (ou « Policy Interface »), et/ou une fonction d'accession aux règles de politiques converties et/ou aux données de configuration des équipements de réseau NE-i qu'il gère.

La fonction de conversion a pour objet de convertir les données primaires, qui proviennent du serveur de politique PS et qui sont destinées à l'un au moins des équipements de réseau NE-i, en commandes de configuration, par exemple de type CLI (pour « Command Line Interface ») ou SNMP, compréhensibles par l'équipement concerné. On entend ici par « compréhensible » le fait d'être interprétable par l'équipement de réseau NE-i.

Une fois la conversion effectuée, les commandes de configuration doivent ensuite être transformées au format du protocole de gestion utilisé par l'équipement de réseau NE-i pour dialoguer avec le système de gestion de réseau NMS. Comme indiqué dans l'introduction, tout type de protocole de gestion peut être envisagé, et notamment le protocole SNMP (pour « Simple Network Management Protocol » RFC 2571-2580) utilisé notamment dans les réseaux de type ADSL, le protocole TL1 utilisé notamment dans les réseaux de type SONET, le protocole Q3 utilisé notamment dans les réseaux de type SDH, ou encore les protocoles CLI, CORBA et Telnet.

Afin de mettre en oeuvre la conversion, les moyens de traitement MT comportent un module de conversion MC qui est préférentiellement implanté dans le module d'adaptation de protocole MAP du système de gestion d'équipements EMS.

En effet, comme le sait l'homme de l'art, certains systèmes de gestion d'équipements EMS sont pourvus d'un module d'adaptation de protocole MAP comportant des sous-modules SMAP, en nombre au moins égal au nombre de protocoles de gestion utilisés par les différents équipements NE-i du réseau N.

Chaque sous-module d'adaptation de protocole SMAP est chargé de transformer, sur ordre, des données, destinées à un équipement NE-i et provenant du système de gestion de réseau NMS, en données selon le protocole de gestion utilisé par cet équipement.

Pour procéder à cette détermination, le système de gestion d'équipements EMS accède aux descripteurs DES stockés dans la mémoire MD.

Comme indiqué précédemment, un descripteur DES est un module informatique qui contient toutes les données nécessaires à la gestion par le système de gestion NMS d'au moins un élément d'équipement. Les descripteurs constituent ainsi, en quelque sorte, des filtres permettant d'accéder à un aspect choisi d'un équipement de réseau NE-i, comme par exemple le protocole de gestion (ou d'échange) qu'il utilise. Il repose sur un modèle interne d'objet décrivant l'aspect concerné de l'équipement NE-i.

Chaque descripteur DES est généralement constitué d'au moins un premier fichier de codes de programmes permettant de discuter avec une interface d'équipement, un deuxième fichier contenant des données qui désignent un type d'équipement, et un troisième fichier contenant des données qui désignent une définition de base d'informations de gestion, ou définition de MIB (« Management Information Base »), associée à l'équipement NE-i du type considéré, et d'au moins un fichier de configuration, par exemple de type XML, qui contient des informations permettant de gérer un type d'équipement du réseau. Les fichiers de codes de programmes des descripteurs DES sont préférentiellement en langage Java, en raison de l'aptitude de ce langage à charger et décharger de façon dynamique des codes informatiques. Mais, d'autres langages peuvent être envisagés, comme par exemple Small Talk, dès lors qu'ils permettent le chargement et le déchargement dynamique de codes informatiques.

Lorsque le système de gestion d'équipements EMS souhaite accéder à un aspect d'un équipement NE-i, il accède au descripteur DES stocké dans la mémoire de descripteurs MD et associé à cet aspect, de manière à déterminer le protocole de gestion de l'équipement NE-i. Il en déduit le sous-module d'adaptation de protocole SMAP qui lui correspond, puis il transmet à ce sous-module d'adaptation de protocole SMAP les données à transformer selon le protocole de gestion (ou d'échange) utilisé par l'équipement NE-i.

En implantant le module de conversion MC dans le module d'adaptation de protocoles MAP, l'invention tire avantageusement partie de l'aptitude des sous-modules d'adaptation de protocoles SMAP à effectuer la transformation des commandes de configuration qui lui sont délivrées au format du protocole de gestion de l'équipement de réseau concerné NE-i, en coopération avec les descripteurs DES.

Ainsi, lorsque le module de conversion MC reçoit des données primaires à convertir, destinées à un équipement de réseau désigné NE-i, il procède à leur conversion en commandes de configuration, par exemple de type CLI ou SNMP, puis il demande, par exemple, au module de contrôle MCT de son module d'adaptation de protocole MAP de déterminer le protocole de gestion utilisé par l'équipement désigné NE-i. Le module de contrôle MCT du module d'adaptation de protocole MAP interroge alors la mémoire de descripteurs MD pour déterminer le protocole de gestion associé à l'équipement désigné NE-i et donc le sous-module d'adaptation de protocole associé SMAP. Le module de conversion MC transmet alors à ce sous-module d'adaptation de protocole SMAP les commandes de configuration afin qu'il les transforme au format du protocole de gestion de l'équipement, puis qu'il lui transmette de façon classique.

En variante, le module de traitement MT peut déterminer directement dans la mémoire de descripteurs MD le protocole de gestion associé à l'équipement désigné NE-i et donc le sous-module d'adaptation de protocole associé SMAP, de manière à communiquer au module de conversion MC les données primaires à convertir en commandes de configuration et la désignation du sous-module d'adaptation de protocole SMAP chargé de transformer ces commandes de configuration au format du protocole de gestion de l'équipement concerné NE-i.

Comme indiqué ci-avant, le module de traitement MT du système de gestion d'équipements EMS peut, en variante ou en combinaison, assurer une fonction d'accession aux règles de politiques converties et/ou aux données de configuration des équipements de réseau NE-i qu'il gère.

En variante ou en complément, les moyens de traitement MT peuvent comprendre un module de filtrage DP chargé d'accéder sur ordre du système de gestion de réseau NMS à l'un quelconque des équipements de réseau NE-i et/ou à une mémoire dédiée ME, par exemple implantée dans le système EMS et stockant les états des équipements NE-i, afin de permettre la gestion de certaines au moins des règles de politique qu'il a instaurées.

Un état peut par exemple être décrit par un opérateur booléen de type vrai/faux. C'est par exemple le cas d'un état indiquant si une interface est en fonctionnement ou à l'arrêt.

Ce module de filtrage DP est préférentiellement agencé sous la forme d'un descripteur de politique implanté dans la mémoire de descripteurs MD. Ce descripteur de politique DP est préférentiellement du même type que ceux présentés ci-avant. Seule sa fonction est différente. Il repose en effet sur un modèle de données décrivant les formalismes ou identifiants des règles de politique.

Le modèle de données définit la façon dont on formule les règles. Une règle s'écrit « si <condition> alors <action> ».

Grâce à ce descripteur de politique DP, il est possible d'extraire d'un équipement de réseau NE-i et/ou de la mémoire dédiée ME, sur ordre du système de gestion de réseau NMS, d'une part, des données secondaires représentatives de règles de politique choisies précédemment instaurées, et d'autre part des données tertiaires représentatives de paramètres de configuration instaurés afin de satisfaire à certaines des règles de politique précédemment reçues.

Les données secondaires sont en fait les commandes de configuration transmises à l'équipement de réseau NE-i. Les données secondaires sont envoyées à l'équipement NE-i, mais elles sont préférentiellement stockées dans la mémoire dédiée ME par le descripteur de protocole DP. Elles constituent en effet des ordres de configuration, et non des paramètres effectifs.

Les données tertiaires sont les paramètres de configuration (ou de fonctionnement) que l'équipement à instaurés pour mettre en oeuvre les traitements de trafic définis par les commandes de configuration reçues. Les données tertiaires sont préférentiellement stockées dans la base d'informations de gestion ou MIB (pour « Management Information Base ») de l'équipement NE-i. Elles peuvent être retrouvées par le descripteur (par interrogation de l'équipement).

De préférence, on conserve dans la mémoire dédiée ME et/ou dans l'équipement NE-i les anciennes commandes de configuration et/ou les anciens paramètres de configuration, pendant une durée choisie.

Les commandes de configuration (ou règles de politique) et/ou les paramètres de configuration peuvent être affichés sur un écran du système EMS ou du système NMS par l'intermédiaire de l'interface graphique GUI, afin que l'opérateur du réseau puisse les analyser.

Par exemple, l'opérateur peut demander au module de filtrage DP de lui fournir les commandes de configuration instaurées et les commandes de configuration précédemment instaurées afin d'analyser l'influence de la modification des commandes de configuration sur les services (ou traitements de trafic effectués).

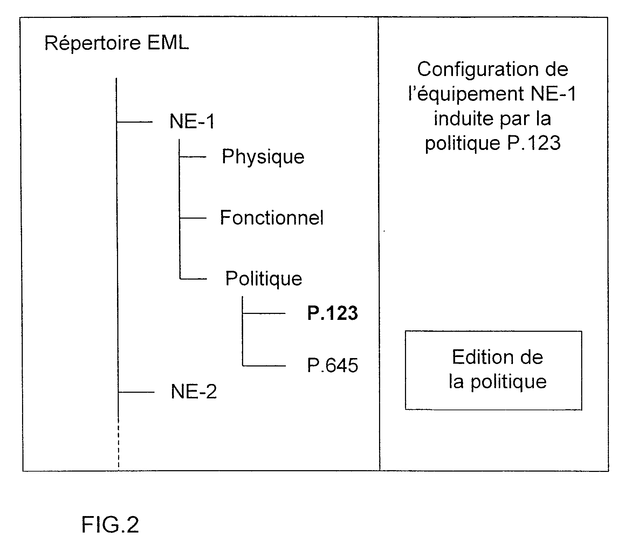

L'opérateur peut également demander au module de filtrage DP, comme illustré sur la figure 2, de lui fournir à la fois les paramètres de configuration (données tertiaires) d'un équipement (par exemple NE-1 ), induits par l'instauration des règles de politique définissant l'une des politiques instaurées dans cet équipement NE-1 (par exemple P.123), et les commandes de configuration (données secondaires) définissant cette politique P.123. Ainsi, l'opérateur dispose, par exemple, sur son écran d'affichage, sur une fenêtre de gauche, de l'arborescence des équipements de réseau NE-i gérés par son système de gestion d'équipements EMS, de la sous-arborescence des fonctions disponibles pour un équipement considéré (ici NE-1) et de la sous-sous-arborescence des différentes politiques instaurées dans cet équipement, et sur une fenêtre de droite, des paramètres de configuration induits par l'instauration de la politique sélectionnée (ici P.123) et des commandes de configuration définissant la politique sélectionnée (ici P.123) dans l'équipement NE-1.

L'opérateur peut ainsi vérifier l'influence d'une politique sur la configuration d'un équipement de réseau NE-i, et donc sur les traitements de trafic effectués par cet équipement. Cela peut lui permettre de comprendre le comportement de l'équipement et de diagnostiquer un conflit entre politiques ou entre règles de politiques à l'origine d'un problème tel qu'un blocage de trafic. Cela peut également permettre à l'opérateur, dans le cadre de simulations de fonctionnement, de déterminer les causes d'un conflit.

On peut également envisager que les moyens de traitement MT comportent un module d'analyse MA couplé au module de filtrage DP et chargé d'analyser chaque correspondance entre données secondaires et données tertiaires, afin de délivrer, par l'intermédiaire de l'interface graphique GUI, des données d'analyse représentatives de l'effet d'au moins une règle de politique sur la configuration d'un équipement de réseau NE-i. Un tel module d'analyse MA se comporte alors comme un outil de diagnostic qui peut éventuellement proposer à l'opérateur des solutions de résolution de conflit.

Par ailleurs, on peut également envisager que le module de filtrage DP soit agencé de manière à permettre à l'opérateur, sous certaines conditions strictes, de modifier des règles de politique ou des commandes de configuration en liaison avec le module de conversion MC.

Le système de gestion d'équipements EMS, et notamment son module de traitement MT, est préférentiellement réalisé sous la forme de modules logiciels ou informatiques (ou « software »), c'est-à-dire sous la forme de fichiers de configuration, par exemple en langage XML, et de fichiers de codes de programme, par exemple en langage Java, afin de permettre son implantation dans tout type d'équipement de réseau NE-i, y compris dans un terminal de communication tel qu'un ordinateur portable. Mais, bien entendu, il pourrait être réalisé sous la forme d'une combinaison de circuits électroniques (ou « hardware ») et de modules logiciels.

Le système de gestion d'équipements EMS selon l'invention, et notamment son module de traitement MT, peut être réalisé sous la forme de circuits électroniques, de modules logiciels (ou informatiques), ou d'une combinaison de circuits et de logiciels.

L'invention offre également un procédé de gestion d'équipements de réseau NE-i, pour un réseau de communications N comprenant une multiplicité d'équipements de réseau NE-i capables d'effectuer des traitements de trafic associés à des services et définis par des règles de politique délivrées sous forme de données primaires par un serveur de politique PS.

Celui-ci peut être notamment mis en oeuvre à l'aide du système de gestion d'équipements EMS présenté ci-avant. Les fonctions et sous-fonctions principales et optionnelles assurées par les étapes de ce procédé étant sensiblement identiques à celles assurées par les différents moyens constituant le système de gestion d'équipements EMS, seules seront résumées ci-après les étapes mettant en oeuvre les fonctions principales du procédé selon l'invention.

Ce procédé consiste à interfacer un système de gestion d'équipements EMS entre le serveur de politique PS et les équipements de réseau NE-i afin de permettre une gestion centralisée des règles de politique et de leur implantation dans ces équipements de réseau NE-i.

Par exemple, lorsque l'on reçoit du serveur de politique PS des données primaires destinées à l'un au moins des équipements de réseau NE-i, on peut convertir ces données primaires en commandes de configuration, par exemple de type CLI ou SNMP, adaptées au protocole de gestion de cet équipement, puis lui transmettre ces commandes de configuration.

Par ailleurs, en variante ou en complément on peut accéder par filtrage à un équipement de réseau désigné NE-i et/ou à une mémoire dédiée ME stockant son état lorsque l'on souhaite gérer certaines règles de politique qu'il a instaurées. On peut ainsi extraire d'un équipement de réseau NE-i et/ou de la mémoire dédiée ME des données secondaires représentatives de règles de politique choisies précédemment instaurées et/ou des données tertiaires représentatives de paramètres de configuration instaurés pour satisfaire à certaines règles de politique précédemment reçues.

L'invention ne se limite pas aux modes de réalisation de système de gestion d'équipements EMS, de serveur de gestion MS et de procédé de gestion décrits ci-avant, seulement à titre d'exemple, mais elle englobe toutes les variantes que pourra envisager l'homme de l'art dans le cadre des revendications ci-après.

## Revendications

1. Système de gestion d'équipements de réseau (EMS), pour un réseau de communications (N) comprenant une multiplicité d'équipements de réseau (NE) agencés pour effectuer des traitements de trafic associés à des services et définis par des règles de politique délivrées sous forme de données primaires par un serveur de politique (PS), **caractérisé en ce qu'**il comprend des moyens de traitement (MT) interfacés entre ledit serveur de politique (PS) et lesdits équipements de réseau (NE) de manière à permettre une gestion centralisée desdites règles de politique et de leur implantation dans lesdits équipements de réseau (NE), et **en ce qu'**il comprend des moyens d'adaptation de protocoles (MAP) dans lesquels sont implantés des moyens de conversion (MC) agencés, à réception de données primaires provenant dudit serveur de politique (PS) et destinées à au moins un équipement de réseau désigné (NE), pour convertir ces données primaires en commandes de configuration afin qu'elles soient transmises audit équipement désigné (NE) selon son protocole de gestion.

2. Système selon la revendication précédente, **caractérisé en ce qu'**il comprend une mémoire (MD) dans laquelle sont stockés des descripteurs (DES) associés chacun à un aspect d'au moins l'un desdits équipements (NE-i) et comportant pour certains les protocoles de gestion utilisés par lesdits équipements.

3. Système selon la combinaison des revendications 1 et 2, **caractérisé en ce que** lesdits moyens d'adaptation de protocoles (MAP) sont agencés pour déterminer dans ladite mémoire (MD) le protocole de gestion utilisé par un équipement (NE-i) destinataire de commandes de configuration.

4. Système selon la revendication 2, **caractérisé en ce que** lesdits moyens de traitement (MT) sont agencés pour déterminer dans ladite mémoire (MD) le protocole de gestion utilisé par un équipement (NE-i) destinataire de commandes de configuration.

5. Système selon l'une des revendications 3 et 4, **caractérisé en ce que** lesdits moyens d'adaptation de protocoles (MAP) sont agencés, une fois en possession du protocole de gestion d'un équipement (NE-i), pour adapter les commandes de configuration, délivrées par lesdits moyens de conversion (MC), au format dudit protocole de gestion, de sorte qu'elles soient transmises audit équipement (NE-i).

6. Système selon l'une des revendications 1 à 5, **caractérisé en ce que** lesdites commandes de configuration sont choisies dans un groupe comprenant les commandes de type CLI et de type SNMP.

7. Système selon l'une des revendications 1 à 6, **caractérisé en ce que** lesdits moyens de traitement (MT) comprennent des moyens de filtrage (DP) propres à accéder sur ordre à l'un desdits équipements de réseau (NE) et/ou à une mémoire dédiée (ME) de manière à permettre la gestion de règles de politique choisies.

8. Système selon la revendication 7, **caractérisé en ce que** lesdits moyens de filtrage (DP) sont agencés pour extraire d'un équipement de réseau (NE) et/ou de ladite mémoire dédiée (ME), sur ordre, des données secondaires représentatives de règles de politique choisies précédemment instaurées.

9. Système selon l'une des revendications 7 et 8, **caractérisé en ce que** lesdits moyens de filtrage (DP) sont agencés pour extraire sur ordre d'un équipement de réseau (NE) des données tertiaires représentatives de paramètres de configuration instaurés par ledit équipement (NE) pour satisfaire à certaines desdites règles de politique précédemment reçues.

10. Système selon la combinaison des revendications 8 et 9, **caractérisé en ce que** lesdits moyens de filtrage (DP) sont agencés pour établir une correspondance entre des données secondaires et tertiaires associées à un équipement de réseau (NE).

11. Système selon la revendication 10, **caractérisé en ce qu'**il comprend des moyens d'analyse (MA) agencés pour analyser une correspondance entre des données secondaires et tertiaires de manière à délivrer des données d'analyse représentatives de l'effet d'au moins une règle de politique sur la configuration d'un équipement de réseau (NE).

12. Système selon l'une des revendications 7 à 11 en combinaison avec la revendication 4, **caractérisé en ce que** lesdits moyens de filtrage (DP) sont implantés dans ladite mémoire de descripteurs (MD).

13. Serveur de gestion (MS) d'un système de gestion de réseau (NMS), **caractérisé en ce qu'**il comprend un système de gestion d'équipements (EMS) selon l'une des revendications précédentes.

14. Équipement de réseau (NE), **caractérisé en ce qu'**il comprend un système de gestion d'équipements (EMS) selon l'une des revendications 1 à 12.

15. Utilisation du système de gestion d'équipements (EMS), du serveur de gestion (MS), et de l'équipement de réseau (NE) selon l'une des revendications précédentes dans les réseaux de transmission, en particulier de type WDM, SONET et SDH, les réseaux de données, en particulier de type Internet-IP et ATM, et les réseaux de voix, en particulier de type classique, mobile et NGN.
